# EUROPEAN PATENT SPECIFICATION

(11) **EP 0 644 702 B1**
(45) Date of publication and mention of the grant of the patent: **14.11.2001**
(21) Application number: 93202709.7
(22) Date of filing: 17.09.1993
(51) Int. Cl.: H04Q 7/30, H04B 7/26

(54) **Communication protocol for a mobile communication system**
Kommunikationsprotokoll für ein mobiles kommunikationssystem
Protocole de communication pour un système de communication mobile

(43) Date of publication of application: 22.03.1995
(73) Proprietor: ALCATEL, 75008 Paris (FR)
(72) Inventor: Pequet, Eric Marc Leon Marie, B-6120 Ham-sur-Heure (Nalinnes) (BE)
(74) Representative: Narmon, Gisèle Marie Thérèse

(56) References cited:
- EP-A- 0 399 612
- WO-A-89/10668
- 39TH IEEE VEHICULAR TECHNOLOGY CONFERENCE vol. 2 , May 1989 , SAN FRANCISCO, US pages 712 - 717 MALOBERTI 'Radio Transmission Interface of the Digital Paneuropean Mobile System'

## Description

The present invention relates to a communication protocol for establishing communications between a first terminal and at least one second terminal and including the following steps:
- providing an uplink channel and a downlink channel for communication from and towards said first terminal respectively;
- providing on each of said channels periodically reoccurring communication frames of communication time slots and signalling frames of signalling time slots; and,
- allocating to said second terminal and on either of said uplink and said downlink channels a plurality of said communication time slots per said communication frame and in predetermined positions thereof.

Such a communication protocol for communication between a base station (the first terminal) and at least one mobile terminal (the second terminal) is already known in the art and is proposed for the future Trans-European Trunked RAdio or TETRA network currently under standardization by the European Telecommunications Standardization Institute ETSI.

A similar protocol is known from WO-A-89 10668.

During the allocated communication time slots the mobile terminal is thus able to perform a so called half-duplex communication, i.e. a communication in one direction on either the uplink or the downlink channel. This is in contrast with full-duplex communications when the mobile terminal performs both uplink and downlink communications on both the above channels and is particularly advantageous for data transfers from or to the mobile terminal, e.g. to upload or download the memory of a computer of this mobile terminal since then communication in only one direction is needed.

The above half-duplex communications, in using more than one time slot per communication frame, are further also advantageous compared to the full-duplex communications since their transfer rate may be higher than with the latter type of communication. Indeed, with full-duplex communication only one time slot per communication frame may be used in mobile networks of the TETRA or GSM type in order to allow sufficient separation between transmit and receive bursts of each of the mobile terminal.

According to the above known protocol these half-duplex communications should nevertheless be provided with a full-duplex signalling channel, signalling time slots on both the downlink and uplink channels should be allocated thereto. It is thought that all problems associated to this allocation are solved by allocating half a signalling time slot to each half-duplex communication since in so doing, even with more half-duplex communications than communication and signalling time slots per frame, each of them may then be associated to a distinct half signalling time slot.

The present invention is based on the insight that irrespective of the latter solution problems may still arise with the allocation of full-duplex signalling channels to the half-duplex communications. Indeed, it is a well established practice when using communication time slots in predetermined positions in the communication frames to also use the (half) signalling time slots having the same predetermined positions in the signalling frames as a full-duplex signalling channel. Following the above practice for half-duplex communications using multiple predetermined time slot positions, a plurality of (half) signalling time slots is used per signalling frame. This is undesirable since a single one (half) signalling time slot suffices, the other(s) constituting an excess in the signalling bandwidth which is then wasted and blocked from use for other purposes. Also, in allocating more than one signalling time slot ambiguity exists for the terminals as to which of the (half) signalling time slots needs to be used by them to receive or transmit data which leads to the terminals possibly operating in vain.

An object of the present invention therefore is to provide a communication protocol of the above type but which does not waste signalling bandwidth and which takes away the above mentioned ambiguity.

The latter object is achieved thanks to the fact that it also includes the step of allocating to said second terminal and on each of said uplink and downlink channels at least part of a single one of said signalling time slots per said signalling frame.

By allocating the above single one of the possible (half) signalling time slots the signalling bandwidth used is restricted to a minimum and the ambiguity with respect to the time slot actually used for signalling no longer persists.

A characteristic feature of the present invention is that said communication and signalling frames contain an equal number of time slots and that said single signalling time slot occupies in each of said signalling frames a position corresponding to one of said predetermined positions.

In this way the above selection is made among those (half) signalling time slots which according to the mentioned well established practice are already associated to the half-duplex communication. In so doing this selection is aligned with the allocation of signalling time slots to full-duplex communications making it less burdensome to implement the present protocol.

A further characteristic feature of the invention is that it also includes the step of providing on each of said channels like time division multiple access structures arranged in periodically recurrent multiframes subdivided in at least a said signalling frame and a said communication frame as well as the step of delaying said time division multiple access structure on a first of said channels with respect to said time division multiple access structure on a second of said channels over a fixed number of said time slots, said single time slot occupying the first/last of said predetermined positions when said communication frames are allocated on said first/last channel respectively.

By delaying the two time division multiple access structures the mentioned separation between the transmit and receive bursts in the mobile terminal is provided for. This separation, used in mobile radio networks such as TETRA and GSM, allows to simplify the mobile terminal, as is well known in the art.

With such a communication protocol not every (half) signalling time slot may be used for signalling associated to a half-duplex communication without violating the above delay between transmit and receive bursts of the second terminal. It can be verified that the above feature in fact forms the only non-violating solution if the above described practice in allocating (half) signalling time slots is to be followed.

An important feature of the present invention is that said structures are delayed over two time slots.

With such a delay, for instance used in the TETRA mobile network, it can be verified that the above choice of (half) signalling time slot is the only one possible without violating the above delay between transmit and receive bursts in the mobile terminal. This is extremely important since the above waste and ambiguity in allocating the (half) signalling time slots pertains to such time slots in which communication normally should not take place. Not using the above protocol would then considerably complicate the second terminal whilst still providing the above mentioned drawbacks associated with the known protocol.

It is finally noted that the present invention also relates to a mobile terminal and a base station communicating according to a communication protocol of the above type.

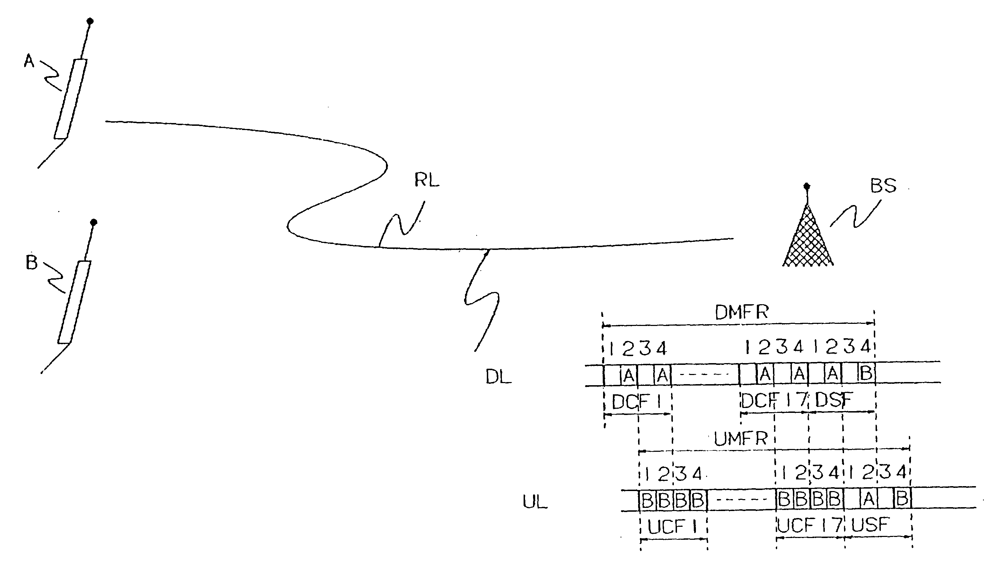

The above mentioned and other objects and features of the invention will become more apparent and the invention itself will be best understood by referring to the following description of an embodiment taken in conjunction with the accompanying drawing showing a mobile communication system using a communication protocol in accordance with the present invention and schematically shown in insets DL and UL of the drawing.

The communication system shown operates according to the specifications of the Trans-European Trunked RAdio or TETRA network primarily intended for communications to and from transport vehicles. In this TETRA network communication takes place between a base station BS and one of a plurality of mobile terminals such as A and B over a radio link RL and by making use of a particular communication protocol. The mobile terminals A and B are vehicle mounted and for instance allow a dispatching service to be installed between a service center and these vehicles via base station BS and radio link RL.

It is to be noted that all components of this TETRA network, i.e. the base station BS, the mobile terminals A and B and associated control devices, may be designed by a person skilled in the art using known mobile radio principles. Thus in the following only the specific novel communication protocol used on the radio link RL and indicated by references DL and UL is described in further detail hereinbelow.

This communication protocol involves the use of two linked frequency channels, i.e. a downlink channel DL operating at a downlink carrier frequency for communication from the base station BS to mobile terminals A and Band an uplink channel UL operating at an uplink carrier frequency and used for communication from the mobile terminals A and B to the base station BS. On each of these channels, DL and UL, a like time division multiple access or TDMA structure consisting of periodically recurrent multiframes, DMFR and UMFR, is used. These multiframes, DMFR and UMFR, are each subdivided in 17 communication frames, DCF1/17 and UCF1/17 respectively, and one signalling frame, DSF and USF respectively. Each of these frames contains 4 time slots each having an identity defined by the communication frame or the signalling frame to which it belongs and by its position or sequence number therein, as indicated in the figure.

As also represented in the drawing these like TDMA structures are mutually delayed over half a frame or in this case over two time slots. This means that each time slot on the downlink channel DL has a corresponding time slot on the uplink channel UL delayed in time over exactly two time slot positions. This is true for both signalling and communication time slots. By allocating to a full-duplex communication between one of the mobile terminals A, B and the base station BS corresponding time slots on both the uplink and downlink channels, UL and DL respectively, the occurrence of simultaneous transmit and receive bursts of each of the terminals is avoided if in each channel only one time slot per communication frame is so allocated. In the present case in fact a separation of one time slot between transmit and receive bursts is achieved.

The drawing shows 2 specific examples of time slot allocation in case of half-duplex communications, i.e. where each of the mobile terminals A and B use communication time slots for communication in one direction only on either the downlink DL or the uplink UL channel. As a consequence, the mobile terminals A and B may use a plurality of time slots per communication frame as this cannot give rise to simultaneous transmit and receive bursts in one of these terminals. As an example, the communication involving mobile terminal A uses two communication time slots, with sequence numbers 2 and 4, per communication frame on the downlink channel DL, for instance for a fast upload via the base station BS of a vehicle computer memory associated to the mobile terminal A whereas mobile terminal B uses all communication time slots, i.e. with the sequence numbers 1 to 4, of the communication frames on the uplink channel UL, e.g. for a fast download of such a vehicle computer memory.

To allow full-duplex signalling for each of the terminals A and B, the communication protocol allocates to that terminal a signalling time slot of both the downlink and uplink signalling frames, DSF and USF respectively, without violating the separation of one time slot between transmit and receive bursts of the mobile terminal. More particularly, this protocol allocates to terminal A and in each of the signalling frames DSF and USF a signalling time slot having the same sequence number as that of the first communication time slot for that terminal, i.e. the signalling time slot having sequence number 2, whereas it allocates to terminal B and also in DSF as well as USF a signalling time slot having the same sequence number as the last communication time slot for that terminal, i.e. the signalling time slot with sequence number 4.

In general it can be said that the present protocol allocates to a half-duplex communication the signalling time slots in frames DSF and USF on the first or the last of the positions used thereby in the communication frames when this communication takes place on the downlink DL or the uplink UL channel respectively.

In the above way, the communication protocol avoids allocation of multiple signalling time slots to a same half-duplex communication as this would result in bandwidth waste and conflict with the delay requirement between transmit and receive bursts of each of the mobile terminals A and B, the bandwidth saved by allocating a single signalling time slot only so becoming available for other purposes, e.g. broadcast signalling.

It is however to be noted that problems remain when more than 4 such half-duplex communications are allocated to the downlink and uplink channels DL and UL. Indeed, in such a case there are not enough full-duplex signalling channels available for all communications, some of the communications contending for the use of a same time slot according to the above general concept of the communication protocol. Such a problem can however be solved irrespective of the above novel aspect of the present protocol for instance by dividing each time slot in two half signalling time slots and by allocating a full duplex signalling channel consisting of such half time slots only to each half-duplex communication, e.g. a first or second half of a signalling time slot if the communication is performed via the downlink DL or uplink UL frequency channels respectively. Another solution is to allow the collision in a signalling time slot and performing an ALOHA-like access protocol therefor.

It is to be finally noted that the mobile terminals A and B as well as the base station BS may be adapted in a straightforward manner to implement the above communication protocol, e.g. by suitably programming their processors (not shown) to transmit and receive signalling information in the above allocated (half) signalling time slots.

While the principles of the invention have been described above in connection with specific apparatus, it is to be clearly understood that this description is made only by way of example and not as a limitation on the scope of the invention.

## Claims

1. Communication protocol for establishing communications between a first terminal (BS) and at least one second terminal (A, B) and including the following steps:
- providing an uplink channel (UL) and a downlink channel (DL) for communication from and towards said first terminal respectively;
- providing on each of said channels periodically reoccurring communication frames (DCF1/17, UCF1/17) of communication time slots and signalling frames (DSF, USF) of signalling time slots; and,
- allocating to said second terminal (A, B) and on either of said uplink and said downlink channels a plurality of said communication time slots per said communication frame and in predetermined positions thereof;
**characterized in that** it also includes the step of allocating to said second terminal (A, B) and on each of said uplink (UL) and downlink (DL) channels at least part of a single one of said signalling time slots per said signalling frame.

2. Communication protocol according to claim 1, **characterized in that** said communication (DCF1/17, UCF1/17) and signalling (USF, DSF) frames contain an equal number of time slots and that said single signalling time slot occupies in each of said signalling frames a position corresponding to one of said predetermined positions.

3. Communication protocol according to claim 2, **characterized in that** it also includes the step of providing on each of said channels (DL, UL) like time division multiple access structures arranged in periodically recurrent multiframes (DMFR, UMFR) subdivided in at least a said signalling frame (DSF, USF) and a said communication frame (DCF1/17, UCF1/17), as well as the step of delaying said time division multiple access structure on a first of said channels (UL) with respect to said time division multiple access structure on a second of said channels (DL) over a fixed number of said time slots, said single time slot occupying the first/last of said predetermined positions when said communication frames are allocated on said first/last channel respectively.

4. Communication protocol according to claim 3, **characterized in that** said structures are delayed over two time slots.

5. Base station (BS) for communicating with at least one mobile terminal (A, B) according to a communication protocol as per any of the previous claims and including processor means for selecting said single time slot per signalling frame (DSF, USF) in said downlink/uplink channel (DL, UL) to transmit/receive signalling data to/from said corresponding mobile terminal.

6. Mobile terminal (A, B) for communicating with a base station (BS) according to a communication protocol as per any of the claims 1 to 4, and including processor means for selecting said single time slot per signalling frame (DSF, USF) in said downlink/uplink channel (DL, UL) to receive/transmit signalling data from/to said base station.

## Patentansprüche

1. Kommunikationsprotokoll zum Aufbauen von Kommunikationen zwischen einem ersten Endgerät (BS) und wenigstens einem zweiten Endgerät (A, B), das die folgenden Schritte umfasst:
- Bereitstellen eines Aufwärtskanals (UL) und eines Abwärtskanals (DL) zur Kommunikation von bzw. zu dem ersten Endgerät;
- Bereitstellen periodisch wiederkehrender Kommunikationsrahmen (DCF1/17, UCF1/17) von Kommunikationszeitschlitzen und Signalisierungsrahmen (DSF, USF) von Signalisierungszeitschlitzen; und
- Zuweisen einer Vielzahl von Kommunikationszeitschlitzen pro Kommunikationsrahmen und an bestimmten Positionen dessen für das zweite Endgerät (A, B) und auf jedem der Aufwärts- und Abwärtskanäle;
**dadurch gekennzeichnet, dass** es auch den Schritt des Zuweisens von wenigstens einem Teil eines einzelnen Signalisierungszeitschlitzes pro Signalisierungsrahmen für das zweite Endgerät (A, B) und auf jedem der Aufwärts- (UL) und Abwärtskanäle (DL) umfasst.

2. Kommunikationsprotokoll nach Anspruch 1, **dadurch gekennzeichnet, dass** die Kommunikations- (DCF1/17, UCF1/17) und Signalisierungsrahmen (USF, DSF) eine gleiche Anzahl von Zeitschlitzen aufweisen und dass der einzige Signalisierungszeitschlitz in jedem der Signalisierungsrahmen eine Position einnimmt, die einer der vorher bestimmten Positionen entspricht.

3. Kommunikationsprotokoll nach Anspruch 2, **dadurch gekennzeichnet, dass** es auch den Schritt des Bereitstellens von gleichartigen Mehrfachzugriffsstrukturen im Zeitvielfachsystem, die in periodisch wiederkehrenden Mehrfachrahmen (DMFR, UMFR) angeordnet sind, die in wenigstens einen Signalisierungsrahmen (DSF, USF) und einen Kommunikationsrahmen (DCF1/17, UCF1/17) unterteilt sind, auf jedem der Kanäle (D1/ UL) sowie den Schritt des Verzögerns der Mehrfachzugriffsstruktur im Zeitvielfachsystem auf einem ersten (UL) der Kanäle in Bezug auf die Mehrfachzugriffsstruktur im Zeitvielfachsystem auf einem zweiten (DL) der Kanäle über eine festgelegte Anzahl der Zeitschlitze umfasst, wobei der einzelne Zeitschlitz die erste/letzte der vorher bestimmten Positionen einnimmt, wenn die Kommunikationsrahmen entsprechend auf dem ersten/letzten Kanal zugewiesen werden.

4. Kommunikationsprotokoll nach Anspruch 3, **dadurch gekennzeichnet, dass** die Strukturen über zwei Zeitschlitze verzögert werden.

5. Basisstation (BS) zum Kommunizieren mit wenigstens einem mobilen Endgerät (A, B) entsprechend dem Kommunikationsprotokoll nach einem der vorhergehenden Ansprüche, die eine Prozessoreinrichtung zum Auswählen des einzelnen Zeitschlitzes pro Signalisierungsrahmen (DSF, USF) im Abwärts-/Aufwärtskanal (DL, UL) umfasst, um Signalisierungsdaten zu/von dem entsprechenden mobilen Endgerät zu senden/empfangen.

6. Mobiles Endgerät (A, B) zum Kommunizieren mit einer Basisstation (BS) entsprechend dem Kommunikationsprotokoll nach einem der Ansprüche 1 bis 4, das eine Prozessoreinrichtung zum Auswählen des einzelnen Zeitschlitzes pro Signalisierungsrahmen (DSF, USF) im Abwärts-/Aufwärtskanal (DL, UL) umfasst, um Signalisierungsdaten von/zu der Basisstation zu empfangen/senden.

## Revendications

1. Protocole de communications pour établir des communications entre un premier terminal (BS) et au moins un second terminal (A, B) et comportant les étapes suivantes consistant à :
- fournir un canal de liaison montante (UL) et un canal de liaison descendante (DL) pour permettre une communication depuis et vers ledit premier terminal, respectivement,
- fournir, sur chacun desdits canaux, des trames de communications réapparaissant périodiquement (DCF1/17, UCF1/17) de créneaux temporels de communications et des trames de signalisation (DSF, USF) de créneaux temporels de signalisation, et
- affecter audit second terminal (A, B) et sur l'un desdits canaux de liaison montante et de liaison descendante, une pluralité dedits créneaux temporels de communications par trame de communications et à des positions prédéterminées de celle-ci,
**caractérisé en ce qu'**il comporte également l'étape consistant à affecter audit second terminal (A, B) et sur chacun desdits canaux de liaison montante (UL) et de liaison descendante (DL) au moins une partie d'un créneau unique parmi lesdits créneaux temporels de signalisation par trame de signalisation.

2. Protocole de communications selon la revendication 1, **caractérisé en ce que** lesdites trames de communications (DCF1/17, UCF1/17) et de signalisation (USF, DSF) contiennent un nombre égal de créneaux temporels et **en ce que** ledit créneau temporel de signalisation unique occupe dans chacune desdites trames de signalisation une position correspondant à l'une desdites positions prédéterminées.

3. Protocole de communications selon la revendication 2, **caractérisé en ce qu'**il comporte également l'étape consistant à fournir sur chacun desdits canaux (DL, UL), des structures d'accès multiple à répartition dans le temps analogues agencées dans des multi-trames périodiquement récurrentes (DMFR, UMFR) sous-divisées en au moins ladite trame de signalisation (DSF, USF) et ladite trame de communications (DCF1/17, UCF1/17), ainsi que l'étape consistant à retarder ladite structure d'accès multiple à répartition dans le temps sur un premier desdits canaux (UL) par rapport à ladite structure d'accès multiple à répartition dans le temps située sur un second desdits canaux (DL) d'un nombre fixe desdits créneaux temporels, ledit créneau temporel unique occupant la première/dernière desdites positions prédéterminées lorsque lesdites trames de communications sont affectées audit premier/dernier canal, respectivement.

4. Protocole de communications selon la revendication 3, **caractérisé en ce que** lesdites structures sont retardées de deux créneaux temporels.

5. Station de base (BS) pour communiquer avec au moins terminal mobile (A, B) conformément à un protocole de communications selon l'une quelconque des revendications précédentes, et comportant des moyens de processeur pour sélectionner ledit créneau temporel unique par trame de signalisation (DSF, USF), dans ledit canal de liaison descendante/liaison montante (DL, UL), afin de transmettre des données de signalisation audit terminal mobile correspondant, et les recevoir depuis celui-ci.

6. Terminal mobile (A, B) pour communiquer avec une station de base (BS) conformément à un protocole de communications selon l'une quelconque des revendications 1 à 4, et comportant des moyens de processeur pour sélectionner ledit créneau temporel unique par trame de signalisation (DSF, USF), dans ledit canal de liaison descendante/liaison montante (DL, UL), pour recevoir des données de signalisation depuis ladite station de base, et les transmettre vers celle-ci.
